# EUROPÄISCHE PATENTSCHRIFT

(11) **EP 2 084 240 B1**
(45) Veröffentlichungstag und Bekanntmachung des Hinweises auf die Patenterteilung: **08.06.2016**
(21) Anmeldenummer: 07821647.0
(22) Anmeldetag: 22.10.2007
(51) Int. Cl.: C09J 133/06, C09J 7/02, C08F 20/18

(54) **HAFTKLEBSTOFF, ENTHALTEND EIN C10 ALKYLACRYLAT**
PRESSURE-SENSITIVE ADHESIVE COMPRISING A C10 ALKYL ACRYLATE
ADHÉSIF SENSIBLE À LA PRESSION CONTENANT UN ACRYLATE D'ALKYLE EN C10

(30) Priorität: 23.10.2006 EP 06122720
(43) Veröffentlichungstag der Anmeldung: 05.08.2009
(73) Patentinhaber: BASF SE, 67056 Ludwigshafen am Rhein (DE)
(72) Erfinder: BEYERS, Cornelis Petrus, 67122 Altrip (DE); GASCHLER, Wolfgang, 67063 Ludwigshafen (DE); URBAN, Dieter, 67346 Speyer (DE)
(74) Vertreter: BASF IP Association
(86) Internationale Anmeldenummer: PCT/EP2007/061283
(87) Internationale Veröffentlichungsnummer: WO 2008/049804

(56) Entgegenhaltungen:
- JP-A- 5 070 403
- JP-A- 5 070 404

## Beschreibung

Die Erfindung betrifft einen Haftklebstoff, der ein synthetisches Polymer als Bindemittel enthält, wobei das Polymer zu mindestens 10 % aus einem C10 Alkylacrylat aufgebaut ist und die Alkylgruppe des C10 Alkylacrylats eine Propylgruppe als Substituenten hat (im nachfolgenden verzweigtes C10 Alkylacrylat genannt), wobei das Polymer zu 0,05 bis 10 Gew.-% aus ethylenisch ungesättigten Verbindungen mit eienr Säuregruppe oder Säureanhydridgruppe (kurz Säuremonomer) aufgebaut ist.

Bei Haftklebstoffen ist eine gute Haftung (Adhäsion) zum Substrat gewünscht. Insbesondere soll die Haftung auch auf unpolaren Substraten, z. B. Substraten aus Polyolefinen gut sein.

Haftklebstoffe auf Basis von wässrigen Polymerdispersionen, welche durch Emulsionspolymerisation erhältlich sind, sind lange bekannt. Insbesondere handelt es sich dabei um Polyacrylate. Eine Verbesserung der Adhäsion oder auch der Kohäsion (inneren Festigkeit) wurde bei derartigen Emulsionspolymerisaten bisher durch Auswahl geeigneter Comonomere oder Additive erreicht. Exemplarisch sei auf DE-A 103 23 048 verwiesen, wonach durch Zusatz von Siliziumverbindungen zur Polymerdispersion positive Effekte erzielt werden.
Aus EP-A 625 557 sind Haftklebstoffe bekannt, die Hydroxyalkylacrylate enthalten.

(Meth)acrylsäureester von 2-Propylheptanol und Verfahren zur Herstellung des Esters sind in DE- A 100 36 879 oder auch in JP 05070404 beschrieben. In JP 05070403 wird ebenfalls die Herstellung beschrieben und auf eine Eignung zur Copolymerisation mit klebrigen Monomeren, z. B. n Butyl- oder 2-Ethylhexylacrylat verwiesen. Die in dieser japanischen Schrift offenbarten Copolymere aus 2-Propylheptylmethacrylat und einem Säuremonomer werden ebenfalls als Klebstoff verwendet.

Aufgabe der vorliegenden Erfindung waren Haftklebstoffe mit verbesserter Adhäsion, auch auf unpolaren Oberflächen.

Demgemäß wurde der eingangs definierte Haftklebstoff gefunden.

Der Haftklebstoff enthält ein synthetisches Polymer als Bindemittel. Wenn im nachfolgenden von C10 Alkylacrylaten oder sonstigen Monomeren als Bestandtell oder Aufbaukomponente des Polymeren die Rede ist, ist natürlich immer die einpolymerisierte Form dieser Monomeren gemeint.

Bei der C10 Alkylgruppe des C10 Alkylacrylats handelt es sich um eine Alkylgruppe mit einer Propylgruppe als Substituenten (nach den Regeln der Nomenklatur wird die längst mögliche lineare Kette der C10 Alkylgruppe bestimmt und festgestellt, ob diese Kette eine Propylgruppe als Substituenten hat). Das erfindungsgemäß verwendete C10 Alkylacrylat wird daher im nachfolgenden verzweigtes C10 Alkylacrylat genannt. Insbesondere handelt es sich um 2-Propylheptylacrylat, 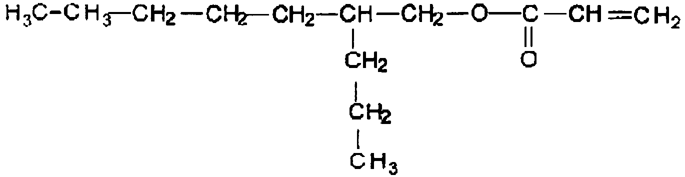 oder 4-Methyl-2-propylhexylacrylat 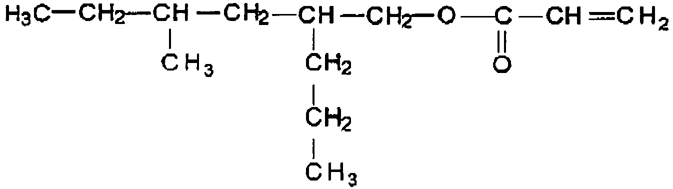 oder deren Gemische.

Bevorzugte Gemische des verzweigten C10 Alkylacrylat bestehen aus
1 bis 99 Gew.-% 2-Propylheptylacrylat und
99 bis 1 Gew.-% 4-Methyl-2-propylhexylacrylat.

Besonders bevorzugte Gemische bestehen aus
50 bis 99 Gew.-% 2-Propylheptylacrylat und
1 bis 50 Gew.-% 4-Methyl-2-propylhexylacrylat.

In einer besonderen Ausführungsform bestehen die Gemische zu 80 bis 95 Gew.-% aus 2-Propylheptylacrylat und zu 20 bis 5 Gew.-% aus 4-Methyl-2-propylhexylacrylat.

Das Polymer besteht vorzugsweise zu mindestens 30 Gew.-% aus dem verzweigten C10 Alkylacrylat, besonders bevorzugt zu mindestens 50 Gew.-% und ganz besonders bevorzugt zu mindestens 70 Gew.-% aus dem verzweigten C10 Alkylacrylat.

Das Polymer kann neben dem verzweigten C10 Alkylacrylat weitere Monomere, insbesondere sogenannte Hauptmonomere, ausgewählt aus sonstigen C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, enthalten.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Als Hauptmonomere bevorzugt sind insbesondere C₁- bis C₈-Alkylacrylate, C1 bis C8 Alkylmethacrylate, Vinylaromaten, insbesondere Styrol, und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Vorzugsweise handelt es sich bei dem Polymer um ein Polyacrylat. Unter Polyacrylat soll ein Polymer verstanden werden, welches insgesamt zu mindestens 50 Gew.-%, vorzugsweise zu mindestens 70 Gew.-% aus C₁ bis C₂₀ Alkyl(meth)acrylaten (wobei auch das verzweigte C10 Alkylacrylat eingeschlossen ist) aufgebaut ist; der Gehalt des verzweigten C 10 Alkylacrylats im Polymer beträgt dabei mindestens 10 Gew.- % (alle Gewichtsangaben sind auf das Polymer bezogen).
Der bevorzugte Gehalt des verzweigten C10 Alkylacrylats ist dabei wie oben angegeben.

Neben dem verzweigten C10 Alkylacrylat und gegebenenfalls den vorstehenden Hauptmonomeren kann das Polymer weitere Monomere enthalten.

In Betracht kommen z. B. Monomere mit Hydroxygruppen, insbesondere Hydroxyalkyl(meth)acrylate, (Meth)acrylamid, Glycidyl(meth)acrylat oder (Meth)acrylnitril; genannt seien auch vernetzende Monomere mit mindestens zwei reaktiven Gruppen, vorzugsweise ethylenisch ungeättigten, polymerisierbaren Gruppen, z. B. Allyl(meth)acrylat, Diacrylate, wie Butandioldiacrylat.

Insbesondere erwähnt seien Monomere mit Säuregruppen oder Säureanhydridgruppen (kurz Säure-Monomere) z. B. Monomere mit Carbonsäure, Sulfonsäure oder Phosphonsäuregruppen. Bevorzugt sind Carbonsäuregruppen oder deren Anhydride. Genannt seien z. B. Acrylsäure, Methacrylsäure, Itaconsäure, Maleinsäure Maleinsäureanhydrid oder Fumarsäure.

Insbesondere kann das Polymer Säure-Monomere in Mengen von 0,1 bis 10, besonders bevorzugt 0,1 bis 5, ganz besonders bevorzugt 0,2 bis 3 Gew.-%, bezogen auf das Polymer enthalten.

Die Glasübergangstemperatur des Polymeren beträgt vorzugsweise -60 bis 0 °C, besonders bevorzugt -60 bis -10 °C und ganz besonders bevorzugt -60 bis -20 °C.

Die Glasübergangstemperatur lässt sich nach üblichen Methoden wie Differentialthermoanalyse oder Differentail Scanning Calorimetrie (s. z. B. ASTM 34181/82, sog. "midpoint temperature") bestimmen.

Die Herstellung der Polymere erfolgt vorzugsweise durch Emulsionspolymerisation, es handelt sich daher um ein Emulsionspolymerisat.

Bei der Emulsionspolymerisation werden ethylenisch ungesättigte Verbindungen (Monomere) in Wasser polymerisiert, wobei ionische und/oder nicht -ionische Emulgatoren und/oder Schutzkolloide bzw. Stabilisatoren als grenzflächenaktive Verbindungen zur Stabilisierung der Momer-tröpfchen und der später aus den Monomeren gebildeten Polymerteilchen verwendet werden.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht.

Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenz-flächenaktive Substanzen verwendet. Gebräuchliche begleitende Emulgatoren sind z. B. ethoxylierte Fettalkohole (EO-Grad: 3 bis 50, Alkylrest: C₈- bis C₃₈), ethoxylierte Mono-, Di- und Tri-Alkylphenole (EO-Grad: 3 bis 50, Alkylrest: C₄- bis C₉), Alkalimetallsalze von Dialkylestem der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 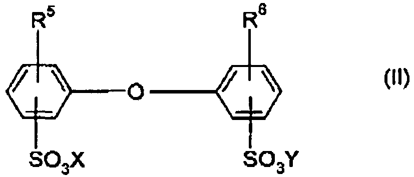 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ Ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax^{®}2 A1, Emulan^{®} NP 50, Dextrol^{®} OC 50, Emulgator 825, Emulgator 825 S, Emulan^{®} OG, Texapon^{®} NSO, Nekenil^{®} 904 S,

Lumiten^{®} I-RA, Lumiten E 3065, Disponil FES 77, Lutensol AT 18, Steinapol VSL, Emulphor NPS 25.
Die grenzflächenaktive Substanz wird üblicherweise in Mengen von 0,1 bis 10 Gew.-%, bezogen auf die zu polymerisierenden Monomeren verwendet.

Bei der Emusionspolymerisation werden üblicherweise wasserlösliche Initiatoren für die radikalische Polymerisation der Monomere verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.
Bei der Polymerisation können auch Polymerisationsregler, kurz Regler, eingesetzt werden. Regler bewirken eine Kettenabbruchsreaktion und verringern somit das Molgewicht des Polymeren. Die Regler werden dabei an das Polymer gebunden, im allgemeinen an das Kettenende.

Die Menge der Regler kann insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren betragen. Geeignete Regler sind insbesondere Verbindungen mit einer Mercaptogruppe wie tert.-Butylmercaptan, Thioglycolsäureethylacrylester, Mercaptoethynol, Mercaptopropyltrimethoxysilan oder tert.-Dodecylmercaptan. Bei den Reglern handelt es sich im allgemeinen um niedermolekulare Verbindungen mit einem Molgewicht kleiner 2000, insbesondere kleiner 1000 g/mol.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Eine Teilmenge der Monomere kann, wenn gewünscht, zu Beginn der Polymerisation im Polymerisationsgefäß vorgelegt werden, die übrigen Monomere, bzw. alle Monomere, wenn keine Monomere vorgelegt werden, werden beim Zulaufverfahren im Laufe der Polymerisation zugegeben.

Auch der Regler kann zum Teil vorgelegt werden, ganz oder teilweise während der Polymerisation oder gegen Ende der Polymerisation zugegeben werden.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgetormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Zur Entfernung der Restmonomeren kann auch nach dem Ende der eigentlichen Emulsionspolymerisation weiterer Initiator zugesetzt werden (chemische Desodorierung).

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Das so hergestellte Polymer wird vorzugsweise in Form seiner wässrigen Dispersion verwendet.

Das Polymer wird als Bindemittel in Haftklebstoffen verwendet.

Der Haftklebstoff enthält das Polymer vorzugsweise in Form der wässrigen Polymerdispersion, wie sie durch die Emulsionspolymerisation erhalten wurde oder erhältlich ist.

Der Haftklebstoff kann ausschließlich aus dem Polymeren, bzw. der wässrigen Dispersion des Polymeren bestehen. Vorzugsweise besteht der Haftklebstoff zu mindestens 20 Gew.-%, besonders bevorzugt zu mindesten 40 Gew.-%, ganz besonders bevorzugt zu mindestens 60 Gew.-% (fest, d. h. gezogen auf alle Bestandteile außer Wasser oder sonstige bei 21 °C, 1 bar flüssige Lösemitel) aus dem Bindemittel.

Der Haftklebstoff kann neben dem Bindemittel weitere Zusatzstoffe enthalten.

In Betracht kommt z. B. ein Tackifier, d. h. ein klebrigmachendes Harz. Tackifier sind z. B. aus Adhesive Age, Juli 1987, Seite 19-23 oder Polym. Mater. Sci. Eng. 61 (1989), Seite 588-592 bekannt.
Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Desweiteren finden auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.
Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈-Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können dem Polymer, bevorzugt der wässrigen Dispersionen der Polymeren, in einfacher Weise zugesetzt werden. Vorzugsweise liegen die Tackifier dabei selber in Form einer wässrigen Dispersion vor.

Die Gewichtsmenge der Tackifier beträgt vorzugsweise 5 bis 100 Gew.-Teile. Besonders bevorzugt 10 bis 50 Gew.-Teile. bezogen auf 100 Gew.-Teile Polymer (fest/fest).

Neben Tackifiern können z. B. noch weitere Additive z. B. Verdickungsmittel, vorzugsweise Assoziativverdicker, Entschäumer, Weichmacher, Pigmente, Netzmittel oder Füllstoffe bei der Verwendung als Haftklebstoff Verwendung finden.

Die erfindungsgemäßen Haftklebstoffe enthalten daher neben der wässrigen Polymerdispersion gegebenenfalls noch Tackifier und/oder die vorstehenden Additive.

Für eine bessere Benetzung von Oberflächen können die Haftklebstoffe insbesondere Benetzungshilfsmittel, z. B. Fettalkoholethoxylate, Alkylphenolethoxylate, Sulfobemsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Die Haftklebstoffe eignen sich zur Herstellung selbstklebender Artikel wie Etiketten, Folien oder Klebebänder. Der Haftklebstoff kann durch übliche Methoden, z. B. durch Rollen, Rakeln, Streichen etc. auf Träger, z. B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Insbesondere eignen sich auch Träger mit unpolaren Oberflächen, z. B. aus Polyolefinen, insbesondere Polyethylen oder Polypropylen, da der Haftkleber darauf sehr gut haftet.
Die Träger können direkt beschichtet werden, dann wird die mit Haftklebstoff beschichtete Seite der Substrate im allgemeinen mit einem Releasepapier (Antihaftschicht), z. B. mit einem silikonisierten Papier, zu ihrem Schutz abgedeckt; alternativ kann der Träger auch auf der Rückseite mit einer Antihaftschicht versehen sein und nach Beschichtung mit dem Haftklebstoff aufgerollt werden. Die Beschichtung kann auch im Transferverfahren erfolgen, d.h. der Haftklebstoff wird zunächst auf die Antihaftschicht eines mit einer Antihaftschicht versehenen Zweitträger beschichtet und dann der Träger zukaschiert.

Das Wasser kann bevorzugt durch Trocknung bei 50 ° bis 150 ° C entfernt werden. Die beschichteten Träger können z. B. zu Klebebändern, Etiketten oder Folien geschnitten werden.

Die erfindungsgemäßen selbstklebenden Artikel haben sehr gute Klebeeigenschaften, insbesondere eine gute Adhäsion zu den Substraten und eine hohe Kohäsion (innere Festigkeit in der Klebstoffschicht). Sie haben auch eine gute Haftung auf unpolaren Oberflächen und eignen sich daher auch besonders für Substrate mit unpolaren Oberflächen, z. B. Oberflächen aus synthetischen Polymeren, insbesondere Polyolefinoberflächen, z. B. aus Polyethylen (HDPE oder LDPE) oder Polypropylen.

### Beispiele

In einem 2-Liter-Polymerisationsreaktor mit Ankerrühren und Heiz-/Kühleinrichtung wurde ein Gemisch aus 92,26 g entionisiertem Wasser und 8,33 g eines 33 gew.- %igen wässrigen Polymerlatex (hergestellt durch radikalisch initiierte Emulsionspolymerisation von Styrol) mit einem gewichtsmittleren Teilchendurchmesser Dw50 von 30 nm unter Stickstoffatmosphäre auf 85 °C erhitzt. Dazu wird bei vorgenannter Temperatur 2,93 g einer 7 gew.-%igen wässrigen Lösung von Natriumperoxodisulfat gegeben. Nach 2 min wird Zulauf 1 und Zulauf 2 gestartet und werden gleichmäßig über 4 h zudosiert.

**Zulauf 1 war eine wässrige Emulsion hergestellt aus**

| | |
|---|---|
| 257,61 g | entionisiertem Wasser |
| 30,16 g | einer 31 gew.-%igen wässrigen Lösung von Emulphor NPS 25 (Nonylphe nolpolyglykolothersulfat, Natrium - Salz) |
| 13,75 g | einer 20 gew.-%igen wässrigen Lösung von Emulgator 825 (PO) (Iso-octyl-phenol + 25 EO) |
| 2,64 g | Acrylsäure (AS) |
| 43,56 g | Methylacrylat (MA) |
| 44,11 g | Methylmethacrylat (MMA) |
| 433,57 g | 2-Ethylhexylacrylat (EHA) / 2-Propylheptylacrylat (PHA) |

### Zulauf 2 war 35,36 g einer 7 gew.-%igen wässrigen Lösung von Natriumperoxodisulfat

Nach Ende der Zuläufe 1 und 2 wird 30 min. gerührt. Danach wurde Zulauf 4 und Zulauf 5 gestartet und gleichmäßig über 60 min. zudosiert.

Zulauf 4 war 5,5 g eine 10 gew.-%ige wässrige Lösung von t-Butylhydroperoxid.

Zulauf 5 war 7,33 g eine 12 gew.-%ige wässrige Lösung von Acetonbisulfit.

Nach Ende der Zuläufe 5 und 6 wurde die Reaktorinnentemperatur auf 25 °C abgesenkt. Die erhaltene wässrige Polymerdispersion wies einen Feststoffgehalt von 55 Gew.-% auf.

**Tabelle 1: Zusammensetzung der Polymere**

| | Vergleichsversuch (V1) Gew.% | Erfindungsgemäßes Beispiel (B1) Gew.% |
|---|---|---|
| EHA | 82,7 | 0 |
| PHA | 0 | 82,7 |
| AS | 0,5 | 0,5 |
| MA | 8,4 | 8,4 |
| MMA | 8,4 | 8,4 |

### Anwendungstechnische Prüfung

Die Polymerdispersionen wurden mit einer Auftragsmenge von 19 g/m² auf Polyethylenfolie als Träger beschichtet (im Transferverfahren, Beschichtung zunächst von Silikonpapier und Transfer auf Polyethylen) und 3 Minuten bei 90 °C getrocknet. Anschließend wurde die Schälfestigkeit (Adhäsion) bestimmt.

Der mit Haftklebstoff beschichtete Träger wurde in 25 mm breite Prüfstreifen geschnitten.
Zur Bestimmung der Schälfestigkeit wurde jeweils ein 2,5 cm breiter Prüfstreifen auf einen Prüfkörper aus Polyethylen geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen, d. h. der Klebestreifen wurde umgebogen und parallel zum Prüfblech abgezogen, und der dazu benötigte Kraftaufwand gemessen. Das Maß für die Schälfestigkeit war die Kraft in N/2,5 cm, die sich als Durchschnittswert aus fünf Messungen ergab.

Die Schälfestigkeit wurde sofort und 24 Stunden nach der Verklebung bestimmt. Nach dieser Zeit hat sich die Klebekraft voll ausgebildet.)

**Tabelle 2: Ergebnisse**

| | Schälfestigkeit (N/2,5 cm) sofort | Schälfestigkeit (N/2,5 cm) nach 24 Stunden |
|---|---|---|
| B1 | 7,3 | 9,8 |
| V1 | 4,7 | 8.8 |

## Patentansprüche

1. Haftklebstoff, enthaltend ein synthetisches Polymer als Bindemittel, **dadurch gekennzeichnet, dass** das Polymer zu mindestens 10 Gew.-% aus einem C10 Alkylacrylat aufgebaut ist und die Alkylgruppe des C10 Alkylacrylats eine Propylgruppe als Substituenten hat (im nachfolgenden verzweigtes C10 Alkylacrylat genannt), wobei das Polymer zu 0,05 bis 10 Gew.-% aus ethylenisch ungesättigten Verbindungen mit einer Säuregruppe oder Säureanhydridruppe (kurz SäureMonomer) aufgebaut ist.

2. Haftklebstoff gemäß Anspruch 1, **dadurch gekennzeichnet, dass** es sich bei dem verzweigten C10 Alkylacrylat um 2-Propylheptylacrylat, 4-Methyl-2-propylhexyl acrylat oder deren Gemische handelt.

3. Haftklebstoff gemäß einem der Ansprüche 1 oder 2, **dadurch gekennzeichnet, dass** es sich bei dem verzweigten C10 Alkylacrylat um ein Gemisch aus 1 bis 99 Gew.-% 2-Propylheptylacrylat und 99 bis 1 Gew.-% 4-Methyl-2-propylhexylacrylat handelt.

4. Haftklebstoff gemäß einem der Ansprüche 1 bis 3, **dadurch gekennzeichnet, dass** das Polymer zu mindestens 30 Gew.-% aus dem verzweigten C10 Alkylacrylat besteht.

5. Haftklebstoff gemäß einem der Ansprüche 1 bis 4, **dadurch gekennzeichnet, dass** das Polymer zu mindestens 50 Gew.-% aus dem verzweigten C10 Alkylacrylat besteht.

6. Haftklebstoff gemäß einem der Ansprüche 1 bis 5, **dadurch gekennzeichnet, dass** das Polymer neben dem verzweigten C10 Alkylacrylat sogenannte Hauptmonomere, ausgewählt aus sonstigen C₁ bis C₂₀ Alkyl(meth)acrylaten, Vinylestem von bis zu 20 C-Atome enthaltenden Carbonsäuren, Vinylaromaten mit bis zu 20 C-Atomen, ethylenisch ungesättigten Nitrilen, Vinylhalogeniden, Vinylethem von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, enthält.

7. Haftklebstoff gemäß einem der Ansprüche 1 bis 6, **dadurch gekennzeichnet, dass** das Polymer insgesamt zu mindestens 70 Gew.-% aus C₁ bis C₂₀ Alkyl(meth)acrylaten (wobei auch das verzweigte C10 Alkyacrylat eingeschlossen ist) aufgebaut ist, und der Gehalt des verzweigten C 10 Alkylacrylats im Polymer mindestens 10 Gew.-% beträgt (alle Gewichtsangaben sind auf das Polymer bezogen).

8. Haftklebstoff gemäß einem der Ansprüche 1 bis 7, **dadurch gekennzeichnet, dass** es sich bei dem Polymer um ein Emulsionspolymerisat handelt.

9. Haftklebstoff gemäß einem der Ansprüche 1 bis 8, **dadurch gekennzeichnet, dass** es sich bei dem Haftklebstoff um einen wässrigen Haftklebstoff handelt.

10. Verwendung der Haftklebstoffe gemäß einem der Ansprüche 1 bis 9 zur Herstellung von selbstklebenden Artikeln.

## Claims

1. A pressure-sensitive adhesive comprising a synthetic polymer binder, wherein the polymer has been synthesized from at least 100% by weight of a C10 alkylacrylate and the alkyl group of the C10 alkylacrylate has a propyl group as substituent (referred to subsequently as branched C10 alkylacrylate), wherein the polymer is synthesized from 0.05% to 10% by weight of ethylenically unsaturated compounds containing an acid group or acid anhydride group (acid monomer for short).

2. The pressure-sensitive adhesive according to claim 1, wherein the branched C10 alkylacrylate is 2-propylheptyl acrylate, 4-methyl-2-propylhexyl acrylate or mixtures thereof.

3. The pressure-sensitive adhesive according to either of claims 1 and 2, wherein the branched C10 alkylacrylate is a mixture of 1% to 99% by weight of 2-propylheptyl acrylate and 99% to 1% by weight of 4-methyl-2-propylhexyl acrylate.

4. The pressure-sensitive adhesive according to any one of claims 1 to 3, wherein the polymer is composed of at least 30% by weight of the branched C10 alkylacrylate.

5. The pressure-sensitive adhesive according to any one of claims 1 to 4, wherein the polymer is composed of at least 50% by weight of the branched C10 alkylacrylate.

6. The pressure-sensitive adhesive according to any one of claims 1 to 5, wherein besides the branched C10 alkylacrylate the polymer comprises so-called principal monomers selected from other C₁ to C₂₀ alkyl(meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

7. The pressure-sensitive adhesive according to any one of claims 1 to 6, wherein the polymer is synthesized in total from at least 70% by weight of C₁ to C₂₀ alkyl (meth)acrylates (including the branched C10 alkylacrylate) and the amount of the branched C 10 alkylacrylate in the polymer is at least 10% by weight (all weight figures are based on the polymer).

8. The pressure-sensitive adhesive according to any one of claims 1 to 7, wherein the polymer is an emulsion polymer.

9. The pressure-sensitive adhesive according to any one of claims 1 to 8, wherein the pressure-sensitive adhesive is an aqueous pressure-sensitive adhesive.

10. The use of the pressure-sensitive adhesive according to any one of claims 1 to 9 for producing selfadhesive articles.

## Revendications

1. Adhésif sensible à la pression, contenant un polymère synthétique en tant que liant, **caractérisé en ce que** le polymère est constitué par au moins 10 % en poids d'un acrylate d'alkyle en C10, et le groupe alkyle de l'acrylate d'alkyle en C10 comprend un groupe propyle en tant que substituant (par la suite nommé acrylate d'alkyle en C10 ramifié), le polymère étant constitué par 0,05 à 10 % en poids de composés éthyléniquement insaturés contenant un groupe acide ou un groupe anhydride d'acide (en abrégé monomère acide).

2. Adhésif sensible à la pression selon la revendication 1, **caractérisé en ce que** l'acrylate d'alkyle en C10 ramifié est l'acrylate de 2-propylheptyle, l'acrylate de 4-méthyl-2-propylhexyle ou leurs mélanges.

3. Adhésif sensible à la pression selon l'une quelconque des revendications 1 ou 2, **caractérisé en ce que** l'acrylate d'alkyle en C10 ramifié est un mélange de 1 à 99 % en poids d'acrylate de 2-propylheptyle et 99 à 1 % en poids d'acrylate de 4-méthyl-2-propylhexyle.

4. Adhésif sensible à la pression selon l'une quelconque des revendications 1 à 3, **caractérisé en ce que** le polymère est constitué par au moins 30 % en poids de l'acrylate d'alkyle en C10 ramifié.

5. Adhésif sensible à la pression selon l'une quelconque des revendications 1 à 4, **caractérisé en ce que** le polymère est constitué par au moins 50 % en poids de l'acrylate d'alkyle en C10 ramifié.

6. Adhésif sensible à la pression selon l'une quelconque des revendications 1 à 5, **caractérisé en ce que** le polymère contient en plus de l'acrylate d'alkyle en C10 ramifié des monomères dits principaux, choisis parmi les autres (méth)acrylates d'alkyle en C₁ à C₂₀, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons ou les mélanges de ces monomères.

7. Adhésif sensible à la pression selon l'une quelconque des revendications 1 à 6, **caractérisé en ce que** le polymère est constitué au total par au moins 70 % en poids de (méth)acrylates d'alkyle en C₁ à C₂₀ (l'acrylate d'alkyle en C10 ramifié étant également inclus), et la teneur de l'acrylate d'alkyle en C10 ramifié dans le polymère est d'au moins 10 % en poids (toutes les données de poids se rapportent au polymère).

8. Adhésif sensible à la pression selon l'une quelconque des revendications 1 à 7, **caractérisé en ce que** le polymère est un polymère en émulsion.

9. Adhésif sensible à la pression selon l'une quelconque des revendications 1 à 8, **caractérisé en ce que** l'adhésif sensible à la pression est un adhésif sensible à la pression aqueux.

10. Utilisation des adhésifs sensibles à la pression selon l'une quelconque des revendications 1 à 9 pour la fabrication d'articles autocollants.
